# EUROPÄISCHE PATENTSCHRIFT

(11) **EP 0 413 799 B1**
(45) Veröffentlichungstag und Bekanntmachung des Hinweises auf die Patenterteilung: **03.11.1993**
(21) Anmeldenummer: 90904297.0
(22) Anmeldetag: 21.02.1990
(51) Int. Cl.: F23G 5/08, F23J 1/08, F23J 9/00, F23H 11/12, F23H 11/18

(54) **MEHRSTUFIGE ROSTANORDNUNG ZUM VERBRENNEN VON MÜLL UND ABFALL SOWIE VERFAHREN ZU DEREN BETRIEB**
ARRANGEMENT OF GRATES FOR INCINERATION OF REFUSE AND WASTE AND METHOD OF ITS OPERATION
ARRANGEMENT DES GRILLES D'INCINERATION DE DECHETS ET DE DETRITUS AINSI QUE METHODE D'OPERATION

(30) Priorität: 06.03.1989 DE 3907166; 14.11.1989 DE 3937866
(43) Veröffentlichungstag der Anmeldung: 27.02.1991
(73) Patentinhaber: PAULI, Balduin, D-82131 Gauting (DE)
(72) Erfinder: PAULI, Balduin, D-8035 Gauting (DE); KNEISSL, Hannes, D-8024 Deisenhofen (DE)
(74) Vertreter: Lewald, Dietrich, Dipl.-Ing.
(86) Internationale Anmeldenummer: EP9000288
(87) Internationale Veröffentlichungsnummer: WO9010826

(56) Entgegenhaltungen:
- CH-A- 240 751
- DE-A- 1 526 076
- DE-A- 3 804 815
- DE-B- 1 039 687
- DE-B- 1 246 924
- GB-A- 751 438
- US-A- 3 745 941

## Beschreibung

Die Erfindung betrifft eine mehrstufige Rostanordnung, insbesondere Stufenschwenkrost für die Verbrennung von Müll und Abfall, mit Aufgabeeinrichtung und gegebenenfalls Trocknungs- sowie Zündrosten, wobei die letzte Roststufe als plane Wirbelkomponentenstufe mit nach oben mündenden Wirbeldüsen ausgebildet ist. (DE-A-38 04 815)

Die Rückstände aus der Müll- und Abfallverbrennung werden auf die verschiedenartigste Weise, im allgemeinen über Roste, Aschentrichter oder dergleichen entsorgt. Dies befriedigt aber nicht, da die Stäube, insbesondere die Filterstäube aus der Raugasreinigung, noch einer besonderen Nachbehandlung vor der Endlagerung unterzogen werden müssen. Vor allen Dingen können vor der Rauchgasreinigung auch mögliche Dioxinbildungen bei den Stäuben im Bereich von ca. 300°C und darunter entstehen, wodurch dann die Filterstäube dioxinbelastet sind.

Der Erfindung liegt die Aufgabe zugrunde, eine wirkungsvollere und für die Endlagerung günstigere Entsorgung der Schlacke und Filterstäube herbeizuführen.

Gelöst wird diese Aufgabe bei einer Rostanordnung der eingangs genannten Art dadurch, daß ein Schlacke- und Rückstandsverflüssiger mit auf die Schlacke richtbaren Düsen quer über dem Ende der letzten Roststufe angeordnet ist.

Es wird nicht verkannt, daß bereits Rostanordnungen bekannt sind, deren letzte Stufe als Schmelzkammer mit eigenem starken Brenner ausgebildet ist. (DE-B-1 246 924)

Bei der Maßnahme nach der Erfindung tragen zur weiteren Erhitzung auch die noch unverbrannten Bestandteile der Ausbrandstufe der Rostanordnung bei.

Der Reinigungseffekt wird noch erhöht und die Entsorgung verbessert, wenn die Rückstände durch Aufblasen gegebenenfalls sauerstoffangereicherter Luft unter Zufuhr von Brennstoff erhitzt, sowie die Filterstäube und deren Verbrennungsrückstände auf die flüssige Schlacke aufgegeben und damit in diese eingebunden werden.

Das Ergebnis ist eine sog. Mineralisierung dieser Rückstände, die sich dann gegebenenfalls im Wegebau und für andere Zwecke einsetzen lassen. Diese kompakten Rückstände sind praktisch nicht eluierbar. Vor allen Dingen werden mögliche Dioxine in den Filterstäuben durch die hohen Temperaturen der Schlackenverflüssigung vollständig zerstört. Eine ungefährliche und umweltfreundliche Ablagerung dieser nunmehr mineralisierten Stäube wird somit ermöglicht.
Selbst in vorhandenen Kesseln können beispielsweise Wanderroste mit Kohlenfeuerung durch eine solche Abfallfeuerung ersetzt werden. Dasselbe gilt für vorhandene Müllkessel und deren Rostfeuerungen.

Die Aufgabetrichteraufgabeklappen sowie Stufenschwenkroste allgemein sind bekannt und sind beispielsweise in der Patentanmeldung DE-A-38 04 815 beschrieben und dargestellt.

Oberhalb des Wirbeldüsenplanrostes kann ein luftbeaufschlagter Schlacke- und Rückstandsverflüssiger in Rohrform mit auf die Schlacke bzw. den Planrost gerichteten Düsen vorgesehen sein. Es ergeben sich also zwei Bereiche, nämlich der Ausbrennrost mit gesteigerter Verbrennung durch die Wirbeldüsen, auf der auch "Wirbelkomponente" genannten letzten Planroststufe und das Anstauen der Verbrennungsrückstände, da der Schlacke- und Rückstandsverflüssiger auch als sog. Staurohr zusätzlich wirken kann.

Es ist auch möglich, praktisch den Planrost als Platte vorzusehen, durch den in gleichmäßigen Anordnungen mehrere Düsenreihen geführt sind. Etwa nach Ausbrand und Vorliegen von Asche schließt sich ein Bereich an, in dem die Wärme noch einmal sprunghaft erhöht wird. Dies kann beispielsweise durch Ausblasdüsen in dem Schlacke- und Rückstandsverflüssiger oberhalb des Planrostes erfolgen. Diese Rohrausbildung kann dreheinstellbar gelagert sein und beispielsweise von der Schlacke fortgedreht werden, wenn flüssige Schlacke nicht erwünscht ist.

Es stellen sich hier Verhältnisse, insbesondere wenn der Luft Sauerstoff beigefügt ist, wie in einer Esse oder einer Schmiede ein. Die Schlacke erreicht Temperaturen um 1400°C und fließt über einen Absatz und fällt dann in einen Schacht und wird in einem Wasserbad gekühlt. Der Schacht hat im Bereich des senkrechten Schlackenabflusses eine Einschnürung.
Die Schlacke kann auch durch Kastenführungen direkt ins Wasserbett einfallen. Wrasenabzüge im Bereich des senkrechten Schlackenschachtes können vorgesehen sein, um die Wrasen abzuziehen und zu verhindern, daß diese sich an die noch flüssige Schlacke anlagern und diese erstarren lassen. Im allgemeinen ist im Wasserbad unten ein Naßkratzer, der die abgekühlte Schlacke austrägt, vorgesehen.

In den Seitenwänden können Schlackenstößel vorgesehen sein, die die Schlacke, ist sie einmal erstarrt, brechen. Der Schlackenstößel ist dann schräg nach oben gerichtet. Der Bereich des Schlackenschmelzflusses ist mit einer hochfeuerfesten Masse, insbesondere Keramikauflage, ausgestampft, um möglichst keinerlei Temperaturverluste zu haben. Die Keramikauflage wird gewöhnlich durch Bestiftung und mit der Schmelzschlacke in Berührung kommenden Teile gehalten.

Das ausgetragene Produkt hat eine kleine Oberfläche und ist deswegen auch nur für geringe Wechselwirkungen mit der Umgebung offen.

Giftige Substanzen wie Kupfer oder Kadmiumdämpfe werden durch das Einbinden in die Schmelzschlacke neutralisiert.

Oberhalb des flüssigen Schlackenbades kann im Rauchgasweg ein quer angeströmter bestifteter Fangrost vorgesehen sein, der gegebenenfalls über versetzt angeordnete Rohrreihen verfügt. Dessen Aufgabe ist es, im Rauchgas noch schwebende Aschentröpfchen aufzufangen und dem Schmelzbad zuzuführen.

Vorzugsweise ist der Schlacke- oder Rückstandsverflüssiger als quer über der letzten Roststufe (Schmelzstufe) ausgebildetes Rohr vorgesehen, das außen eine Isolierung in Form einer Stampfmasse trägt, die durch Wasserdurchfluß gekühlt ist. Innerhalb des Rohres befindet sich ein Luftzuführungsrohr und innerhalb dessen ein Brennstoffzuführungsrohr für Gas bzw. Heizöl. Im allgemeinen wird man Brennstoffdüsen mit seitlich jeweils zugeordneten Luftaustrittsdüsen vorsehen, um gezielt und steuerbar die Schlacke zu schmelzen bzw. auf die gewünschte Temperatur zu bringen oder auf dieser zu halten.

Im Bereich vor diesem Schlacke- oder Rückstandsverflüssiger kann der Filterstaub zugeführt werden. Dies erfolgt zweckmäßig in brikettierter Form, gegebenenfalls mit Kohlenstaubzugabe, so daß der Filterstaub zusätzlich Brennstoff zur Verflüssigung der Schlacke einbringt.

Die Filterstaubaufgabe (in Form von Pellets) kann beispielsweise über die gesamte Breite über eine Schurre, evtl. mit Wurfbeschicker bzw. direkt mit dem Brennstoff zusammen über den Rost vorgesehen sein.

Für den Fall, daß wider Erwarten die Schmelztemperaturen nicht erreicht werden sollten, können zusätzlich zuschaltbare Niederdrucklanzenbrenner im Bereich des Ausflußschachtes, die gegen die Nase, über die die Schlacke läuft, gerichtet sind, vorgesehen sein.

Eine beispielsweise Ausführungsform der Erfindung soll nun mit bezug auf die beiliegenden Zeichnungen näher erläutert werden, in denen
- Fig. 1: eine erste Ausführungsform im Schnitt,
- Fig. 2: eine andere Ausführungsform, die um 90° gegenüber Fig. 1 gedreht dargestellt ist, zeigt.

Die Schlacke aus Müll- und Abfallverbrennungsanlagen, hier einem Stufenschwenkrost, wird am Rostende auf einem Planrost 4 beispielsweise mit nach oben gerichteten Wirbeldüsen 2 vermittels eines schiebenden Zuteilers 1 bis unter einen Schlacke- oder Rückstandsverflüssiger 5 (von Rohrform) längs des Zuteilerweges transportiert. Auch bei Betriebsende schiebt der Zuteiler 1 nach vorne, damit keine flüssige oder feste Asche mehr verbleibt und erstarren kann. Der Schlacke- oder Rückstandverflüssiger 5 ist ein quer über dem Ende der letzten Roststufe angeordnetes Gebilde, beispielsweise in Rohrform mit parallelen Reihen von gerichteten Auslaßwirbeldüsen. Der Schlacke- oder Rückstandsverflüssiger 5 in Rohrform ist selbst mit einer Stampfmasse 51 umkleidet, um gegen die Strahlungswärme von Schmelzbad geschützt zu sein. Der Rohrkörper kann drehbar sein, so daß die Auftrefforte der Strahlen geändert werden können. Die Stampfmasse ist innenseitig mit Wasser (bei 56), insbesondere vermittels Durchflußkühlung, gekühlt. Über das konzentrisch innerhalb der Wasserkühlung befindliche Rohr 53 wird Luft zugeführt. Innerhalb des Rohres ist ein an sich bekanntes Brennstoffrohr koaxial innerhalb des rohrförmigen Schlacke- oder Rückstandsverflüssigers 5 angeordnet und bläst über Wirbeldüsen 55 aus. Seitlich nach der Darstellung parallel zur Reihe der Wirbeldüsen 55 sind Luftdüsen 58 in Reihenform vorgesehen. Es kann aber nicht nur Gas, sondern auch Heizöl EL mit entsprechenden Austrittsdüsen zur Erhitzung der Schlacke 11 vorgesehen sein. Diese Erhitzung ist völlig unabhängig von den senkrecht zum Planrost ausblasenden Wirbeldüsen 2. Die Beaufschlagung kann über einen Ventilator 110 erfolgen. Luft kann über 12 zugeführt sein. Eine Sauerstoffanreicherung bei 13 ist möglich. Die Luft aus dem Schlacke- oder Rückstandsverflüssiger wird also direkt auf die Schlacke, gegebenenfalls mit Brennstoff, zusammen geblasen. Hierdurch wird die Schlacke 11 aufgrund der darin enthaltenen noch verbrennbaren Substanzen auf über 1400°C erhitzt. Andererseits kühlen Luft und Sauerstoff den Schlacke- oder Rückstandsverflüssiger zusätzlich.

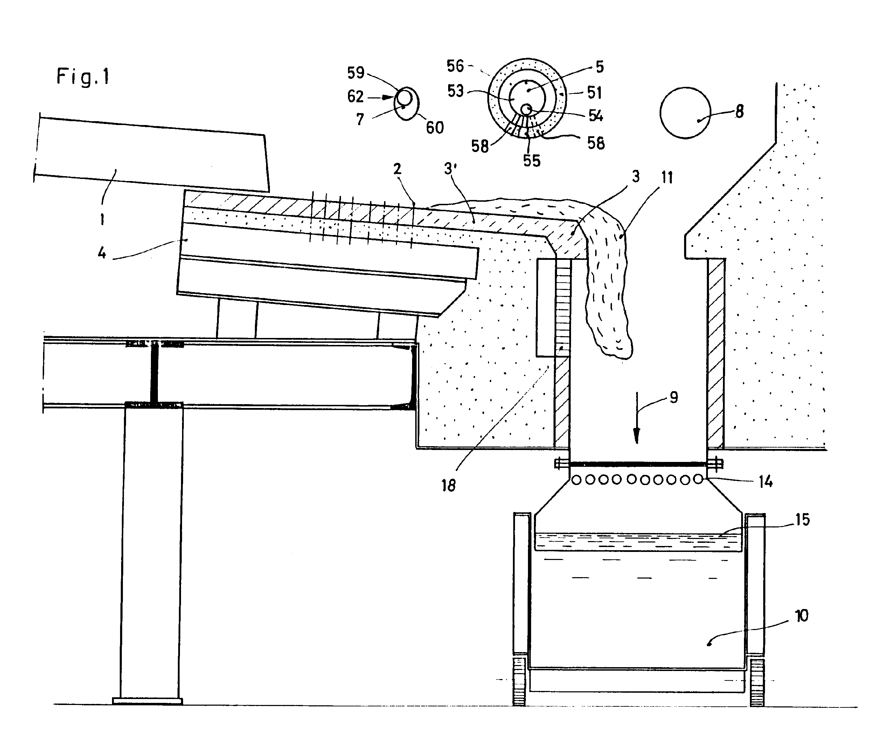

Der herausgefilterte Staub wird einer nicht dargestellten Presse zum Brikettieren zugeführt. Die entstehenden Pellets werden mit Kohlenstaubzugabe versehen: der Filterstaub bringt dadurch zusätzlich Brennstoff zur Verflüssigung der Schlacke ein. Die Filterstaubaufgabe in Pelletform kann dabei seitlich über eine Schurre 7 erfolgen, beispielsweise in trompetenartiger Ausbildung. In der Darstellung der Fig. 1 ist die Aufgabe in das Trompetenrohr mit 62, der Trompetenaustragsmund mit 60 bezeichnet. Gegebenenfalls kann ein Wurfbeschicker vorgesehen sein. Es ist auch möglich, denn brikettierten Filterstaub direkt mit dem Brennstoff auf dem (nicht dargestellten) Rost aufzugeben.

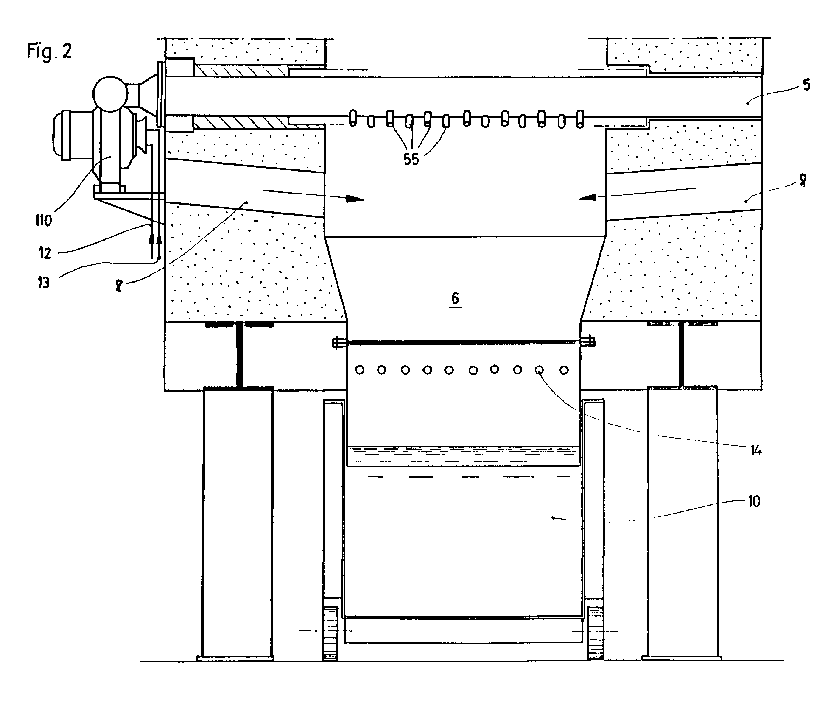

Zur weiteren Erhöhung der Schmelztemperatur können rohrförmige nur angedeutete Brenner 8, die quer zum Schlackenschacht bzw. Fallschacht 6 angeordnet sind, vorgesehen sein. Die Beschickung kann mit Öl, alternativ aber auch mit Gas und Kohlenstaub erfolgen. Die Brenner sind entsprechend dem Brennstoff auszulegen. Figur 2 zeigt wie die Brenner 8 leicht schräg nach unten in den Schlackenschacht gerichtet sind.

Die im Bereich der Wirbeldüsen 2 bzw. des Rückstandsverflüssigers 7 erwärmte und verflüssigte Schlacke läuft über Keramikauflagen 3' oberhalb des Planrostes 4 bis zu einer Nase 3, die eine Einschnürung für den Schacht 9 darstellt. Die Schlacke 11 fällt in das Wasserbad 10, dessen Wasserspiegel bei 15 angedeutet ist. Rückseitig bzw. unter der Nase befinden sich SiC Steine 18, die rückseitig mit Luft gekühlt sind. Das Eintreten der Schlacke in das Wasserbad 10 hat eine Brüdenentstehung zur Folge. Diese Brüden werden über Wasserbad bei 14 abgesaugt, um in der Verflüssigungszone keine Temperaturabsenkung entstehen zu lassen und werden dann in den Feuerraum oberhalb des Rostes zur Nachverbrennung eingeleitet.

Das Einschmelzen der Müllaschen wird also mit energiereichen Zusatzstoffen, wie beispielsweise Kohlenstoff, Kohlenstaub oder feinkörniger Kohle bzw. Gas oder Öl erreicht: somit ergibt sich eine Vergleichmäßigung der Asche und ein damit gleichmäßigeres Schmelzen: zusätzliche Wärme kann zugeführt werden.

Gemäß Fig. 2 können zusätzliche Niederdrucklanzenbrenner in den Wandungen des Schmelzschachtes vorgesehen sein, um den Schlackenfluß zu begünstgen und eine "Einfrierung" zu vermeiden.

Schlackenstößel können, brauchen aber nicht schräg nach oben gerichtet im Schlackenschacht angeordnet sein. Die Schlacke fällt in das Wasserbad 10, das mit einem nicht dargestellten Kratzbandentschlacker ausgestattet ist. Die Schlacke wird dort abgekühlt und liegt in mineralisierter Form vor und wird über diesen Kratzförderer ausgetragen.

Im Bereich der Wirbeldüsen und des flüssigen Schlackenabzugs haben die Roststäbe 4 und die den Schlackenfluß begünstigenden Flächen 3' sowie die Ausflußorgane Keramikauflagen oder dergleichen.

Beispielsweise ebenfalls über Stahlstifte ist die hochfeuerfeste Stampfmasse 51 auf dem Rückstandsverflüssiger gehalten. Auch der Fangrost kann mit einer hochfeuerfesten Masse umgeben, beispielsweise gestampft sein, genauso wie der Zuteiler 1 wärmeisoliert ausgebildet ist.

Bei der Anwendung der Maßnahme nach der Erfindung auf Klinikmüll wird gegebenenfalls Soda oder Pottasche zur Herabsetzung des Schmelzpunktes der Asche zugesetzt. Auch ein Zusatz von Salz (NaCl) ist möglich.

Abhänging von bestimmten Zusammensetzungen kann auch Caliumchlorid oder Borax zugegeben werden. Abhängig von der Zusammensetzung sind auch andere Flußmittel möglich.

All dies begünstigt das Fließen der Schlacke über die Keramikauflage 3' des Planrostes 4 das Fließen über den abgeschrägten Bereich der Nase 3, der dann in einen senkrechten Nasenabschnitt übergeht.

Die Schlackenab- oder -überströmnase 3 kann, um "Einfrierungen" zu vermeiden, auch beheizbar sein. Die Beheizung kann beispielsweise elektrisch erfolgen.

Der Filterstaub und sonstige Rückstände aus der Rauchgasreinigung können nach einer alternativen Ausführungsform über Einblasdüsen bzw. geeignete Zubringereinrichtungen der Müll- und Abfallschlacke zugegeben und in den flüssigen Schlackenabzug eingebunden werden.

## Patentansprüche

1. Mehrstufige Rostanordnung, insbesondere Stufenschwenkrost für die Verbrennung von Müll und Abfall, mit Aufgabeeinrichtung und gegebenenfalls Trocknungs- sowie Zündrosten, wobei die letzte Roststufe als plane Wirbelkomponentenstufe mit nach oben mündenden Wirbeldüsen ausgebildet ist,
dadurch gekennzeichnet, daß ein Schlacke- und Rückstandverflüssiger mit auf die Schlacke richtbaren Düsen quer über dem Ende der letzten Roststufe angeordnet ist.

2. Rostanordnung nach Anspruch 1, dadurch gekennzeichnet, daß der Austrag der geschmolzenen Schlacke in das Wasserbad (10) mit einem Kratzförderer ausgebildet ist.

3. Rostanordnung nach Anspruch 1, dadurch gekennzeichnet, daß der Schlacke- und Rückstandsverflüssiger quer angeordnet und außen mit Stampfmasse (51) sowie Wasserkühlung (56) zwischen Stampfmasse und einem Luftrohr (53), innerhalb des letzteren ein Brennstoffrohr (54) angeordnet ist, versehen ist.

4. Rostanordnung nach Anspruch 1 oder 3, dadurch gekennzeichnet, daß der Schlacke- oder Rückstandsverflüssiger (5) drehverstellbar gelagert ist.

5. Rostanordnung nach einem der vorhergehenden Ansprüche, dadurch gekennzeichnet, daß zur gegebenenfalls nötigen Erhöhung der Temperatur (Niederdrucklanzenbrenner (8) ) im Bereich des Schmelzschlackenaustrags (3; 11) vorgesehen sind.

6. Rostanordnung nach Anspruch 5, dadurch gekennzeichnet, daß im Bereich der Schlackenschmelzstufe bzw. kurz vor dieser ein Austrag (7), insbesondere als trompetenförmige Schurre, für zu Pellets verpreßtem Filterstaub vorgesehen ist.

7. Rostanordnung nach Anspruch 6, dadurch gekennzeichnet, daß die Schurre (7) zur Aufgabe von Kohlenstaub zusätzlich zu den Pellets ausgebildet ist.

8. Rostanordnung nach einem der vorhergehenden Ansprüche, gekennzeichnet durch einen dem Planrost (4) zugeordneten, die Schlacke bis zum Schlacke- oder Rückstandsverflüssiger (5) transportierenden Zuteiler (1).

9. Rostanordnung nach Anspruch 8, dadurch gekennzeichnet, daß der Planrost (4) eine Keramikauflage (3`), die in eine Schlackenabwurfnase (3) übergeht, trägt.

10. Rostanordnung nach Anspruch 9, dadurch gekennzeichnet, daß die Nase (3) einen abgeschrägten Bereich trägt, an den sich ein senkrechter Bereich anschließt.

11. Rostanordnung nach einem der vorhergehenden Ansprüche, dadurch gekennzeichnet, daß im Rauchgasweg oberhalb des Schlackenbades ein quer angeordneter gegebenenfalls aus versetzten Elementen bestehender bestifteter Fangrost für mitgerissene Schlacketröpfchen angeordnet ist.

12. Verfahren zum Betrieb einer Rostanordnung nach einem der vorhergehenden Ansprüche, dadurch gekennzeichnet, daß die Schlacke durch Aufblasen von sauerstoffangereicherter Luft und Brennstoffen weiter erhitzt wird.

13. Verfahren nach Anspruch 12, dadurch gekennzeichnet, daß für die Verbrennung von Klinikmüll der Asche bzw. Schlacke Soda, Pottasche oder Kochsalz zugegeben werden.

## Claims

1. Multi-step grate arrangement, especially pivoting step grate for the combustion of refuse and waste, with a feed device and, if appropriate, drying and igniting grates, the last grate step being designed as a planar swirl-component step with swirl nozzles opening upwards, characterised in that a slag and residue liquefier with nozzles directable onto the slag is arranged transversely above the end of the last grate step.

2. Grate arrangement according to Claim 1, characterised in that the discharge of the molten slag into the water bath (10) is designed with a scraper conveyor.

3. Grate arrangement according to Claim 1, characterised in that the slag and residue liquefier is arranged transversely and is provided on the outside with tamping mass (51) and water cooling (56) between the tamping mass and an air pipe (53), a fuel pipe (54) being arranged within the latter.

4. Grate arrangement according to Claim 1 or 3, characterised in that the slag or residue liquefier (5) is mounted so as to be rotationally adjustable.

5. Grate arrangement according to one of the preceding claims, characterised in that (low-pressure lance torches (8)) are provided in the region of the molten-slag discharge (3; 11), if appropriate for the necessary increase in temperature.

6. Grate arrangement according to Claim 5, characterised in that a discharge (7), especially as a trumpet-shaped chute, for filter dust pressed to form pellets is provided in the region of the slag-melting step or just in front of this.

7. Grate arrangement according to Claim 6, characterised in that the chute (7) is designed for the feed of coal dust in addition to the pellets.

8. Grate arrangement according to one of the preceding claims, characterised by a metering device (1) assigned to the plane grate (4) and transporting the slag to the slag or residue liquefier (5).

9. Grate arrangement according to Claim 8, characterised in that the plane grate (4) carries a ceramic coating (3') which merges into a slag throw-off nose (3).

10. Grate arrangement according to Claim 9, characterised in that the nose (3) carries a bevelled region which a vertical region adjoins.

11. Grate arrangement according to one of the preceding claims, characterised in that a transversely arranged studded catch grate for slag droplets carried along, which, if appropriate, consists of offset elements, is arranged in the smoke-gas path above the slag bath.

12. Method for operating a grate arrangement according to one of the preceding claims, characterised in that the slag is heated further by blowing oxygen-enriched air and fuels onto it.

13. Method according to Claim 12, characterised in that soda, potash or cooking salt is added to the ash or slag for the combustion of clinical refuse.

## Revendications

1. Agencement à grilles à plusieurs étages, grille pivotante à étages notamment, pour l'incinération d'ordures ménagères et de détritus, comportant un dispositif d'alimentation et éventuellement des grilles de séchage et d'inflammation, le dernier étage de grille étant un étage plan à éléments tourbillonnants comportant des tuyères à turbulence débouchant vers le haut, caractérisé en ce qu'un liquéfacteur de scorie et de résidus, comportant des tuyères pouvant être dirigées vers la scorie, est placé transversalement au-dessus de l'extrémité du dernier étage de grille.

2. Agencement à grilles selon la revendication 1, caractérisé en ce que le déversement de la scorie fondue dans le bain-marie (10) est réalisé au moyen d'un transporteur à racloirs.

3. Agencement à grilles selon la revendication 1, caractérisé en ce que le liquéfacteur de scorie et de résidus est un tuyau transversal, pourvu extérieurement d'un pisé réfractaire damé (51), ainsi que d'un refroidissement par eau (56) situé entre le pisé réfractaire damé et un tube d'amenée d'air(53), à l'intérieur duquel est placé un tuyau d'amenée du combustible (54).

4. Agencement à grilles selon la revendication 1 ou 3, caractérisé en ce que le liquéfacteur de scorie et de résidus (5) est logé de manière à pouvoir être réglé en rotation.

5. Agencement à grilles selon l'une des revendications précédentes, caractérisé en ce qu'il est prévu pour une élévation éventuellement nécessaire de la température des brûleurs à lances à basse pression (8) dans la zone du déversement (3;11) de la scorie fondue.

6. Agencement à grilles selon la revendication 5, caractérisé en ce que, dans le secteur de l'étage de fusion de la scorie ou peu avant celui-ci, un déversement (7), une goulotte en forme de trompette notamment, est prévu pour de la poussière filtrée comprimée en pellets.

7. Agencement à grilles selon la revendication 6, caractérisé en ce que la goulotte (7) est configurée pour l'alimentation en poussière de charbon en complément des pellets.

8. Agencement à grilles selon l'une des revendications précédentes, caractérisé par un distributeur (1) associé à la grille plane (4) et transportant la scorie jusqu'au liquéfacteur de scorie et de résidus (5).

9. Agencement à grilles selon la revendication 8, caractérisé en ce que la grille plane (4) porte un revêtement céramique (3'), qui se transforme en nez de déversement de la scorie (3).

10. Agencement à grilles selon la revendication 9, caractérisé en ce que le nez (3) porte une zone biseautée, à laquelle se raccorde une zone perpendiculaire.

11. Agencement à grilles selon l'une des revendications précédentes, caractérisé en ce que dans la voie des gaz de combustion, au-dessus du bain de scorie, est placée transversalement, chevillée, éventuellement composée d'éléments décalés, une grille collectrice pour les gouttelettes de scorie entraînées.

12. Procédé pour l'exploitation d'un agencement à grilles selon l'une des revendications précédentes, caractérisé en ce que la scorie est échauffée ultérieurement par soufflage d'air enrichi en oxygène et de combustibles.

13. Procédé selon la revendication 12, caractérisé en ce que, pour la combustion de déchets des cliniques, l'on ajoute à la cendre ou à la scorie de la soude, de la potasse ou du gros sel.
